**Europäisches Patentamt**

**(19) European Patent Office**

**Office européen des brevets**

(11) Publication number : **0 340 036 B1**

(12) **EUROPEAN PATENT SPECIFICATION**

(45) Date of publication of patent specification :
15.07.92 Bulletin 92/29

(51) Int. Cl.⁵ : **C08J 9/40, A47L 13/16,**
**// C08L75:04**

(21) Application number : **89304325.7**

(22) Date of filing : **28.04.89**

(54) **Synthetic sponge-type articles having excellent water retention.**

(30) Priority : **29.04.88 FR 8805743**

(43) Date of publication of application :
**02.11.89 Bulletin 89/44**

(45) Publication of the grant of the patent :
**15.07.92 Bulletin 92/29**

(84) Designated Contracting States :
**DE ES IT**

(56) References cited :
**FR-A- 2 592 886**
**US-A- 3 171 820**
**US-A- 3 450 614**

(73) Proprietor : **MINNESOTA MINING AND**
**MANUFACTURING COMPANY**
**3M Center, P.O. Box 33427**
**St. Paul, Minnesota 55133-3427 (US)**

(72) Inventor : **Eleouet, Bernard**
**3M France Boulevard de L'Oise**
**F-95006 Cergy Pontoise Cedex (FR)**
Inventor : **Ramage, Michel**
**3M France Boulevard de L'Oise**
**F-95006 Cergy Pontoise Cedex (FR)**
Inventor : **Rongier, Gilles**
**3M France Boulevard de L'Oise**
**F-95006 Cergy Pontoise Cedex (FR)**

(74) Representative : **Baillie, Iain Cameron et al**
**c/o Ladas & Parry, Altheimer Eck 2**
**W-8000 München 2 (DE)**

## Description

Technical Field

The present invention relates to sponge-type articles mainly used for wiping, cleaning, and other household and industrial uses.

Background

Natural sponges have excellent water retention and physical, mechanical and chemical resistance qualities when used with normal household and industrial cleaning materials. Besides being somewhat scarce and expensive, natural sponges have irregular shapes and dimensions and thus are not selected for use in many commercial applications where standard shapes and dimensions are required.

One of the synthetic sponge-type materials made to replace natural sponge is regenerated cellulose. Regenerated cellulose can be commercially manufactured with desirable standardized shapes and dimensions. Synthetic cellulose sponges have sufficient water retention properties for common uses, but they also have a high production cost and inferior physical, mechanical and chemical resistance properties when they are used with common household maintenance products.

Less expensive sponge-type alternatives having better physical and chemical resistance have been developed. These include synthetic open celled foam sponges made of natural rubber or of a synthetic rubber polymer latex, principally from polyvinyl chloride, polyamide and polyurethane. These foams can be commercially manufactured at reasonable cost and have acceptable physical and chemical resistance, but they are generally hydrophobic and consequently have only a small water retention capacity, thus making them generally unacceptable for satisfactory wiping.

Such synthetic hydrophobic foam materials have been rendered hydrophilic by superficial coating of a hydrophilic substance such as clay. While synthetic sponge-type materials having water retention characteristics close to those of cellulose were obtained by this technique, the clay coating is only temporary and it soon disappears after a few rinses.

While not previously applied to hydrophobic foams to improve wiping properties, various methods are known to facilitate the slow diffusion of volatile or soluble substances, such as perfumes or medicines, from other types of articles such as a lozenge, granule, wrist watch, ear ring, plaque or strip. These involve the formation of absorbent hydrophilic inclusions in a hydrophobic support. This has been accomplished by polymerization in situ of monomers which on polymerization produce an absorbent material in the hydrophobic substrate. This method is described in the French Patent No. 2 250 793 (published June 6, 1975) and its addition certificate No. 2 348 238 (published November 10, 1977) which describes a process in which monomer (polymerizable to an absorbent reticulum) is polymerized on a hydrophobic substrate and the polymerization is controlled by ionic or ultrasonic radiation, or by immersion of the hydrophobic substrate into a solution containing the monomers, to produce hydrophilic inclusions in the hydrophobic substrate. No disclosure is made in these references of making articles having the required sponge-type properties of a wiping article and the disclosed articles appear to have a rigid structure rather than that of a flexible sponge.

French patent FR-A-2592886 discloses forming a foam body for example of polyurethane and forming on at least part of the surface of the cell walls a hydrophilic layer from a polymeric material. However, there is no disclosure of a foam body with the specific surface of the present invention and a specific energy surface as there is no disclosure of the minimum properties to obtain excellent wiping properties

The application to sponge-type articles of the aforementioned disclosed technique does not readily provide the present invention since these references fail to appreciate the physical property requirements that are needed to produce a commercially useful sponge-type article having excellent wiping properties. On the contrary, a systematic study reveals important differences from one material to the other, and an absence of any relationship between the capacity to retain water by capillary action of the same treated and untreated supports, and their structural characteristics, such as cell diameter, air-permeability and specific surface. Thus, surprisingly the same absorbency treatment does not result in a comparable improvement in the water retention characteristics of hydrophobic open celled foams having different physical structures.

Summary of the Invention

The present invention provides synthetic sponge-type products for household and industrial applications having excellent water retention qualities similar to that of a cellulose sponge and physical, mechanical and chemical resistance that is at least equal to those of a cellulose sponge.

The articles of the invention comprise a body made of hydrophobic synthetic partially open-celled foam wherein the cell walls of the foam are at least partially covered by a layer of a hydrophilic absorbent material. The body of the hydrophobic foam material has a specific surface of at least 40 $cm^2/cm^3$ and at least 25% of its internal and external surface has a surface energy of at least 73 x $10^{-7}$ Newton/meter.

Preferably, the average cell diameter of the foam body is less than 0.7 mm and the specific surface of the foam body is between 40 and 70 $cm^2/cm^3$, most preferable between 50 and 70 $cm^2/cm^3$.

The articles of the invention are permeable, preferably having a dry air-permeability corresponding to an overpressure of at least 100 pascals (most preferably at least about 125 pascals) for a 2 cm sample thickness. The water absorption properties of the articles of the invention are preferably sufficient to provide water absorption by capillary action at normal room temperature of at least 2 grams of water per 1 $cm^2$ of cross-section area for a 2 cm sample thickness after a 15 second immersion.

Preferred articles in according with the invention have a hydrophobic foam body made of polyurethane foam covered by a hydrophilic surface-active polymer of the acrylate type which preferably has been polymerized in situ onto the surface of the cells of the hydrophobic foam.

## Detailed Description

The articles having aforementioned physical properties have been found to have use in commercial and household applications as sponge-type articles with superior water retention properties. Characterization of the physical properties of useful products is thus an important aspect of the present invention and it was only after much research and development that the following tests and performance criteria were developed.

## Water Retention Capacity by Capillary Action

The quantity of water absorbed in 15 seconds by a test sample having an approximate size of 75 mm x 100 mm x 20 mm is measured. The test sample is first rinsed with water to remove trapped air, and then spinned twice to remove excess water, prior to measuring. Measuring is accomplished by immersing one 75 mm x 20 mm end of the sample about 6 mm into water (55 $cm^3$ of water in a standard beaker of size 1 liter) at normal room temperature. After 15 seconds, the test sample is removed, and the absorbed quantity of water is determined by weighing the beaker to determine weight loss resulting from absorption by the test sample. Then, the same procedure is repeated for the other sample end and the average of the two measurements is determined. This average is recalculated for a test sample having a 15 $cm^2$ cross-section. This value is then expressed in g/15 $cm^2$.

## Specific Surface

The wettability of a material depends on its surface energy, the surface tension of the liquid with which it is in contact, and the effective surface in contact with the liquid. Therefore, the surface wetted by the liquid can be determined from the measurement of its liquid retention capacity. If a liquid having a surface tension less than that of the material surface energy is used, the total specific surface of tested material can be calculated. Thus, for sponges with a polyurethane support having a surface tension of about 30 x $10^{-7}$ Newton/meter, the retention capacity in 99% ethanol (surface tension is 23 x $10^{-7}$ Newton/meter) can be measured. On the contrary, the liquid retention capacity in distilled water is measured to calculate specific surface of the same sponge wettable with water, i.e. sponge whose surface energy is at least equal to the surface tension of water (73 x $10^{-7}$ Newton/meter). The specific surface expressed in $cm^2/cm^3$ is then calculated by the formula:

$$\text{Specific Surface} = \frac{(p-9.55) \times 65.4}{y}$$

in which

p = liquid weight absorbed by capillary action.

y = liquid surface tension

9.55 is a correction factor of the test sample immersed part

65.4 is the ratio of the gravity (g = 981 $cm/s^2$) to the test sample cross-section (15 $cm^2$).

The difference of obtained values for water and ethanol corresponds to the percent of surface of the base hydrophobic foam material which has been treated with the absorbent polymer.

### Average Cell Diameter

Determination of the average cell size permits the characterization of the physical structure of a foam to identify its relationship with the product performance as a sponge-type material. The measurement is made by drawing a straight 50 mm line on a dry foam material, and the cells touched by the line are counted to arrive at a number (N). Such measurement is preferably accomplished with the aid of a magnifier to avoid the confusion between the cells themselves and the apertures or "windows" of the cells which can be counted as cells.

Average cell diameter expressed in mm is calculated by the formula:

$$\text{Average Diameter} = \frac{50}{N}$$

### Air Permeability

Resistance to a controlled air flow through the foam material is calculated by the measurement of the air overpressure which is established up-stream of a test sample surface.

This measurement allows calculating, at the level of the internal structure and in a comparative manner, the degree of openness of the cells of the foam. This method derived from French specification AFNOR NFT 56 127 to determine the behavior of cellular material vis-a-vis the air flow.

Measurement is made by placing a dry 20 mm thick test sample on an open celled honeycomb support and then placing on the top surface of the test sample a 50 mm diameter diffuser of a weight of 1,050 g. Dry compressed air is then passed through the test sample at a flow rate of about 113 liter/minute. The overpressure in the diffuser is measured in millimeter of water by use of a U-shaped water level meter. The test sample is then inverted and the test repeated. The average of the two measurements is calculated and the average expressed in pascal is retained as value of the air-permeability of foam material.

Preferred articles according to the present invention include a polyurethane open-celled foam covered by a hydrophilic acrylate type polymer, the latter being polymerized in situ. Examples of useful hydrophilic acrylate type polymers include polyethylene glycol diacrylate, diethylene glycol diacrylate, tetraethylene glycol diacrylate, polyethylene glycol dimethacrylate, diethylene glycol methacrylate, triethylene glycol dimethacrylate and tetraethylene glycol dimethacrylate. These polymers may be produced from their monomers under known polymerization conditions. Other hydrophobic materials which may be useful to make the hydrophobic foam substrate include polyvinyl chloride, polyacrylonitrile and polyester.

In a particularly advantageous embodiment, a sponge-type article made in accordance with this invention is characterized by the fact that its body is made of polyurethane type foam having partially open cells, a specific surface between about 40 $cm^2/cm^3$ and 70 $cm^2/cm^3$, with cells having an average diameter less than about 0.7 mm, a dry air-permeability corresponding to an overpressure of at least about 125 pascal for a thickness of 2 cm, with at least 25% of the internal surface being covered by a polyacrylate type coating having a surface energy at least equal to $73 \times 10^{-7}$ Newton/meter, and the article has a water retention capacity by capillary action at normal room temperature, in 15 seconds, at least equal to 2 $g/cm^2$ of external surface for a thickness of about 2 cm.

### Examples

This invention will be better understood by reference to the specific description of the following examples.

### Examples 1-6

In a conventional way, a partially open celled polyurethane foam is prepared by addition of 2,4 and 2,6 (80/20) toluene diisocyanate or methylene diparaphenylene isocyanate to a polyol in presence of water or other suitable solvent (e.g., Freon halogenated hydrocarbon liquid) as a blowing or foaming agent, with usual additives and in the presence of catalytic agents such as stannous octoate and triethylene diamine. The degree of openness and the cell size of the foam are regulated by addition of surface-active agents to produce a hydrophobic polyurethane sponge-type substrate having the required physical characteristics for this invention.

The degree of openness and the size of the cells are regulated, among other things, by the addition of a surface active agent (preferably silicone) which allows obtaining empirically a sponge-type hydrophobic substrate of polyurethane having the characteristics required for the implementation of the invention.

One example of the chemical formulation of the polyurethane is as follows:

```
                    Mixture A
          Polyol (Desmophen 3600)        75 parts
          Polyol (Desmophen 3900)        25 parts
          Water                          3 parts
          Triethylene diamine (DABCO)    0.5 part
          Stannous octoate (T9)          0.5 part
          Silicone Polyurax (SC120)      1 part
   Total                                 105 parts
```

Desmophen is a registered trademark of the Bayer Company, DABCO and T9 are registered trademarks of the Air Products Company, Polyurax is a registered trademark of the BP Company.

Around 45 parts of toluene diisocyanate 80/20 are added to 100 parts in weight of mixture A and the two parts are mixed rapidly and thoroughly for around five seconds.

A flexible, partially open celled foam material results after about 10 to 24 hours of polymerization.

Then an absorbency treatment is performed on this substrate in accordance with the technique described in the French patent No. 2 250 793 by impregnating it with a monomer capable of being polymerized to a hydrophilic polymer such as acrylic acid with a crosslinking agent such as tetraethylene glycol diacrylate, oxygenated water (for the initiating couple oxide-reducer $H_2O_2$, salts of Iron II), and distilled water. The excess of reactive agents are eliminated by spinning or squeezing, then the wiped substrate is impregnated with a solution of Iron II to initiate the polymerization reaction. When this reaction is over, the by-products and any residues of the reaction are eliminated, then the substrate is rinsed with water, spinned or squeezed and dried to obtain a sponge-type article in accordance with this invention.

Consequently, polyurethane sponges are made and have various characteristics with which water capillarity is measured before and after absorbency treatment. Obtained results are gathered in the following table:

| Polyurethane sponge Sample No. | Cells diameter (mm) | Specific surface ($cm^2/cm^3$) | Absorbent treatment (% treated surf.) | Air permeability (pascal) | Water capilarity ($g/15\ cm^2$) |
|---|---|---|---|---|---|
| 1 | 0.79 | 27.7 | 0<br>41.4 | 270<br>186 | 1.5<br>22.3 |
| 2 | 0.57 | 39.4 | 0<br>33.0 | 49<br>29 | 1.4<br>24.1 |
| 3 | 0.51 | 47.7 | 0<br>41.5 | 383<br>147 | 2.2<br>31.6 |
| 4 | 0.52 | 79.0 | 0<br>27.0 | 764<br>300 | 1.1<br>33.3 |
| 5 | 0.60 | 49.0 | 0<br>44.5 | 3116<br>795 | 1.0<br>33.8 |
| 6 | 0.36 | 60.3 | 0<br>41.0 | 1049<br>147 | 1.3<br>37.1 |

EP 0 340 036 B1

Only Examples 3 to 6 satisfy the physical requirements to produce the invention which provide a water capillarity in excess of 30 g/15 cm². Examples 1 and 2 are comparative examples.

Structural criteria required for this invention are those corresponding to specific surface values greater than 40, of which at least 25% show result of absorbency treatment, preferably with cell diameter less than 0.7 mm and an air-permeability greater than 100.

The comparison of criteria values measured on the examples show that there is a surprising lack of determining relation between obtained capillarity and ratio of surface retaining the absorbency treatment, as well as cell diameters, specific surface, and air-permeability, also between these various criteria, outside of the combination of the values range established by this invention. Also, it is noted that there is an unforeseeable absence of significant relation between measured capillarity before and after treatment.

Sponge-type articles made in accordance with this invention, have an excellent resistance against household cleaning products which they can handle during normal use, particularly hot water at 70°C, detergents having ammonium or not. Practically, they keep their water retention and wiping quality until normal worn out of their hydrophobic initially absorbent post-treated support.

## Claims

1. A synthetic sponge-type article having excellent water retention properties, comprising a flexible, partially open celled foam body made of hydrophobic synthetic material, the cell walls of said foam body being at least partially covered with a layer of hydrophilic absorbent material, wherein the foam body has a specific surface at least equal to 40 cm²/cm³, and at least 25% of its internal and external surface has an surface energy at least equal to $73 \times 10^{-7}$ Newton/meter.

2. An article in accordance with claim 1 wherein average diameter of the cells of said body is less than about 0.7 mm.

3. An article in accordance with either of claims 1 and 2 wherein the specific surface of the body is between 50 and 70 cm²/cm³.

4. An article in accordance with any one of claims 1 to 3 wherein said foam body has a dry air-permeability corresponding to an overpressure of at least equal to 100 pascals for a sample thickness of about 2 cm.

5. An article in accordance with any one of claims 1 to 4 having a water absorption by capillary action at normal room temperature of at least 2 grams of water per 1 cm² of cross-section for a thickness of about 2 cm, for 15 seconds.

6. An article in accordance with any one of claims 1 to 5 wherein said hydrophobic material is polyurethane and said hydrophilic material layer is a surface-active polymer of the acrylate type polymerized in situ.

## Patentansprüche

1. Schwammartiger Kunststoffgegenstand mit ausgezeichnetem Wasserrückhaltevermögen, mit einem flexiblen teilweise offenzelligem Schaumstoffkörper, der aus hydrophobem Kunststoff besteht und dessen Zellwände mindestens teilweise mit einer Schicht aus einem hydrophilen Absorbens überzogen sind, dadurch gekennzeichnet, daß der Schaumstoffkörper eine spezifische Oberfläche von mindestens 40 cm²/cm³ und auf mindestens 25% seiner Innen- und Außenfläche eine Oberflächenenergie von mindestens $73 \times 10^{-7}$ Newton/Meter hat.

2. Gegenstand nach Anspruch 1, dadurch gekennzeichnet, daß der durchschnittliche Durchmesser der Zellen des Körpers kleiner ist als etwa 0,7 mm.

3. Gegenstand nach Ansoruch 1 oder 2, dadurch gekennzeichnet,daß der Körper eine spezifische Oberfläche zwischen 50 und 70 cm²/cm³ hat.

4. Gegenstand nach einem der Ansprüche 1 bis 3, dadurch gekennzeichnet, daß die Durchlässigkeit des Schaumstoffkörpers für trockene Luft bei einem etwa 2 mm dicken Probekörper einem Überdruck von mindestens 100 Pascal entspricht.

5. Gegenstand nach einem der Ansprüche 1 bis 4, dessen kapillares Wasserabsorptionsvermögen bei einer Dicke von etwa 2 cm bei normaler Zimmertemperatur mindestens 2 g Wassersäule pro 1 cm² Querschnittsfläche beträgt.

6. Gegenstand nach einem der Ansprüche 1 bis 5, dadurch gekennzeichnet, daß der hydrophobe Werkstoff Polyurethan ist und die Schicht aus dem hydrophilen Werkstoff ein in situ polymerisiertes, oberflächenaktives acrylatartiges Polymer ist.

## Revendications

1. Article du type spongieux synthétique, présentant d'excellentes propriétés de rétention de l'eau, comprenant une masse de mousse flexible, à cellules partiellement ouvertes, formée d'une matière synthétique hydrophobe, les parois des cellules de cette masse de mousse étant au moins partiellement recouvertes par une couche d'une matière absorbante hydrophile, article dans lequel la masse de mousse a une surface spécifique au moins égale à 40 cm²/cm³, et au moins 25 % de sa surface interne et de sa surface externe ont une énergie superficielle au moins égale à 73 x 10⁻⁷ Newton/mètre.

2. Article suivant la revendication 1, dans lequel le diamètre moyen des cellules de la masse susdite est inférieur à environ 0,7 mm.

3. Article suivant l'une ou l'autre des revendications 1 et 2, dans lequel la surface spécifique de la masse est comprise entre 50 et 70 cm²/cm³.

4. Article suivant l'une quelconque des revendications 1 à 3, dans lequel la masse de mousse a une perméabilité à l'air sec correspondant à une surpression au moins égale à 100 Pascals pour une épaisseur d'échantillon d'environ 2 cm.

5. Article suivant l'une quelconque des revendications 1 à 4, présentant une absorption d'eau par action capillaire, à une température ambiante normale, d'au moins 2 g d'eau par cm² de section transversale pour une épaisseur d'environ 2 cm, pendant 15 secondes.

6. Article suivant l'une quelconque des revendications 1 à 5, dans lequel la matière hydrophobe précitée est du polyuréthanne, et la couche de matière hydrophile est un polymère tensio-actif du type acrylate, polymérisé in situ.